# EUROPÄISCHE PATENTSCHRIFT

(11) **EP 0 883 775 B1**
(45) Veröffentlichungstag und Bekanntmachung des Hinweises auf die Patenterteilung: **03.12.2003**
(21) Anmeldenummer: 97907060.4
(22) Anmeldetag: 28.02.1997
(51) Int. Cl.: F21V 23/04

(54) **LEUCHTENABDECKUNG EINER LEUCHTE MIT BEWEGUNGSMELDER UND SEINER GUSSFORM**
COVER FOR A LIGHT WITH MOTION DETECTOR AND CASTING MOULD THEREOF
COUVERCLE DE LAMPE AVEC DETECTEUR DE MOUVEMENT ET SON MOULE DE FONDERIE

(30) Priorität: 01.03.1996 DE 19607872
(43) Veröffentlichungstag der Anmeldung: 16.12.1998
(73) Patentinhaber: Sonlux Licht- und Elekroinstallation GmbH & Co. KG Sondershausen, 99706 Sondershausen (DE)
(72) Erfinder: EIDLOTH, Siegfried, D-96328 Küps (DE)
(74) Vertreter: Skora, Michael
(86) Internationale Anmeldenummer: EP9701018
(87) Internationale Veröffentlichungsnummer: WO97032159

(56) Entgegenhaltungen:
- EP-A- 0 331 508
- WO-A-90/07083
- DE-U- 9 315 070
- GB-A- 2 226 120
- US-A- 3 710 130

## Beschreibung

Die Erfindung betrifft eine Leuchtenabdeckung einer Leuchte mit Bewegungsmelder, eine Leuchte mit Bewegungsmelder und eine Gußform für eine Leuchtenabdeckung einer Leuchte mit Bewegungsmelder.

Aus DE 40 27 347 C2 ist eine Leuchte bekannt, bei der ein Bewegungsmelder innerhalb eines Leuchtengehäuses angeordnet ist. Das Gehäuse der Leuchte ist gegenüber einer Halterung, mit der die Kombination aus Leuchte und Bewegungsmelder an einer Gebäudewand befestigbar ist, drehbar, um durch die Drehung der Leuchte gegenüber der Halterung eine Einstellung der Richtcharakteristik des Bewegungsmelders vornehmen zu können. Dazu sind ferner eine besondere Anordnung der Verkabelung und einer Schaltungsplatine des Bewegungsmelders und eine in das Gehäuse integrierte Einstellvorrichtung, mit der das Sensorelement des Bewegungsmelders innerhalb des Gehäuses gekippt werden kann, um eine Reichweitenanpassung des Bewegungsmelders vornehmen zu können, vorgesehen.

Ferner ist aus der EP 0 331 508 A2 eine Leuchte mit Bewegungsmelder bekannt, bei der eine Leuchtenabdeckung vorgesehen ist, die einen Trägerkörper und Anschlußelemente der Leuchte teilweise kapselt. Bei dieser Leuchte ist in der Leuchtenabdeckung ein vollständig transparentes Fenster vorgesehen, hinter welchem der Bewegungsmelder angeordnet ist. Eine Beeinflussung des räumlichen Empfindlichkeitsbereichs des Sensorelements ist bei der Leuchte gemäß EP 0 331 508 A2 nicht vorgesehen.

Die bekannten Leuchtenabdeckungen und Leuchten haben den Nachteil, daß das Vorhandensein eines Bewegungsmelders optisch erkennbar ist, so daß ein Umgehen der mit dem Bewegungsmelder ausgerüsteten Leuchte möglich ist. Daher sind solche Leuchten nur bedingt zur Objektsicherung verwendbar. Darüber hinaus beeinträchtigt die Erkennbarkeit des Bewegungsmelders das optische Erscheinungsbild der Leuchte. Ferner ist nachteilig, daß die Beeinflussung des räumlichen Empfindlichkeitsbereichs des Sensorelements des Bewegungselements gar nicht oder mit hohem Fertigungs- und Einstellaufwand möglich ist.

Der Erfindung liegt die Aufgabe zugrunde, eine Leuchtenabdeckung, eine Leuchte und eine Gußform für eine Leuchtenabdeckung zur Verfügung zustellen, so daß der Fertigungsaufwand der Leuchte, die ein optisches Element zur Beeinflussung des räumlichen Empfindlichkeitsbereiches eines Sensorelementes aufweist, reduziert und die Freiheit bei der Gestaltung des optischen Erscheinungsbildes der Leuchte vergrößert wird.

Die Lösung dieser Aufgabe erfolgt mit den Merkmalen der Ansprüche 1, 7 bzw. 9.

Gemäß der Erfindung ist vorgesehen, daß die Leuchtenabdeckung und das optische Element einstückig ausgebildet und in einer gemeinsamen Form in einem Arbeitsgang hergestellt sind. Das optische Element dient dabei der Beeinflussung des räumlichen Empfindlichkeitsbereichs eines Sensorelements des Bewegungsmelders, so daß Leuchtenabdeckung und Sensorelement gemeinsam eine Richtcharakteristik im Sinne einer Richtungsselektion aufweisen.

Die Richtcharakteristik wird bei der erfindungsgemäßen Leuchtenabdeckung ohne relativ zueinander bewegbare Teile erreicht, so das die Anordnung insgesamt unempfindlich und verschleißarm ist. Im Gegensatz zum Stand der Technik werden die Leuchtenabdeckung und das optische Element als ein einziges Bauteil hergestellt, so daß der mit der Montage einzelner Elemente verbundene Herstellungsaufwand entfällt.

Durch die einstückige Ausbildung von Leuchtenabdeckung und optischem Element und die gemeinsame Formung in einem Arbeitsgang wird aber nicht nur der Herstellungsaufwand reduziert sondern auch ein ästhetisch ansprechendes, homogenes Äußeres der Leuchtenabdeckung erreicht. Das optische Element weist vorzugsweise ein System von Einzellinsen auf oder ist als Fresnel-Linse ausgebildet.

Die Möglichkeit, das Äußere der Leuchtenabdeckung homogen zu gestalten, hat neben dem ästhetischen Vorteil auch einen technischen Vorteil, da das Vorhandensein des Bewegungsmelders an der Leuchte nicht mehr erkennbar ist. Ein Umgehen der Leuchte, um eine Einschaltung der Leuchte zu verhindern, wird damit praktisch unmöglich gemacht. Die Tarnung eines Bewegungsmelders und die damit verbundene Überraschungswirkung, wenn mit den Gegebenheiten nicht vertraute Personen eine Betätigung der Leuchte auslösen, trägt bei Einsatz einer solchen Leuchte zur Objektsicherung zur Sicherheit gegen unbefugtes Betreten bei.

Neben der Tarnwirkung hat die äußerlich nicht wahrnehmbare Integration des optischen Elements in die Leuchtenabdeckung den Vorteil, daß das Design von bestehenden Leuchten auch bei Hinzufügung eines Bewegungsmelders unverändert beibehalten werden kann. Die mit der Anordnung eines Bewegungsmelders verbundenen technischen Vorteile lassen sich somit erzielen, ohne ein bewährtes Designkonzept verlassen zu müssen.

Gemäß einer bevorzugten Ausführungsform der Erfindung sind bei einer Leuchtenabdeckung mindestens zwei optische Elemente zur Beeinflussung des räumlichen Empfindlichkeitsbereich von Sensorelementen eines Bewegungsmelders, die Aufnahmen zur wahlweisen Anbringung von Sensorelementen aufweisen, vorgesehen. Dadurch ist es möglich, eine Leuchte zur Verfügung zu stellen, bei der das Sensorelement des Bewegungsmelders verschieden anordenbar, insbesondere umsteckbar ist, so daß je nach Einsteckposition des Sensorelements relativ zu der Leuchte unterschiedliche Richtungen durch den Bewegungsmelder erfaßbar sind.

Um den Herstellungsaufwand gering zu halten und die Tarnwirkung zu erhöhen, sind die Leuchtenabdeckung und das optische Element vorzugsweise aus einem gemeinsamen Material hergestellt. Polyethylen ist als gemeinsames Material besonders geeignet, da es für von einem Infrarot-Bewegungsmelder zu erfassende Infrarotstrahlung im Bereich von 6 bis 14 µm eine ausreichende Transmission aufweist. Zwar hat das Polyethylen für Leuchten ungünstige mechanische und thermische Eigenschaften, diese können jedoch durch entsprechende Gestaltung der Leuchtenabdeckung und eines mit der Leuchtenabdeckung zu verwendenden Trägerkörpers kompensiert werden.

Wenn die Leuchtenabdeckung aus Polyethylen besteht, muß sichergestellt werden, daß die Temperatur der Leuchtenabdeckung bei Dauerbetrieb 80° C nicht erreicht. Dazu ist bei Verwendung ohmscher Leuchtmittel, z. B. bei 35 W Linienlampen vorgesehen, das ohmsche Leuchtmittel mindestens teilweise freizulassen, so daß die von den Leuchtmitteln ausgehende Wärme frei abgestrahlt werden kann.

Bei vollständig geschlossenen Leuchten, bei denen das Leuchtmittel gekapselt ist, wird ein übermäßiges Erwärmen der Leuchtenabdeckung durch die Verwendung von Energiesparlampen, z.B. von Kaltkathodenleuchtstofflampen, insbesondere in Verbindung mit elektronischen Vorschaltgeräten, verhindert. Eine thermische Überbeansprachung wird dabei insbesondere durch leistungsselektive Fassungen, zu denen nur bestimmte genormte Leuchtmittel bestimmter Leistung passen, oder durch Leistungsbegrenzer wie z.B. Sicherungen oder durch Temperaturfühler mit Abschaltelektronik erreicht.

Der Trägerkörper besteht vorzugsweise aus ABS (Acrylnitril-Butadien-Styrol), PC (Polycarbonat) oder aus Mischungen unter Verwendung dieser Kunststoffe.

Eine besonders gute Tarnwirkung ergibt sich, wenn die Leuchtenabdeckung und das optische Element nicht nur aus einem gemeinsamen Material hergestellt sind, sondern auch einheitlich eingefärbt und/oder oberflächenstrukturiert sind.

Die Leuchte ist vorzugsweise mit einem Bedienelement zur Steuerung der Betriebsweise der Leuchte versehen. Dieses Bedienelement umfaßt vorzugsweise einen Infrarotreflexnäherungsschalter oder einen kapazitiven Näherungsschalter. Durch die Näherungsschalter und das Bedienelement läßt sich die Betriebsweise besonders einfach und ohne zusätzlichen Installationsbedarf beeinflussen. Bei einer entsprechenden Auslegung des Bedienelements ist es dann z.B. möglich, die Leuchte von einem Bewegungsmelder gesteuerten Modus auf einen Dauerlichtmodus zu schalten oder andere Betriebsarten vorzuwählen.

Um die Richtcharakteristik des Bewegungsmelders der Leuchte mit individueller Akzentuierung einsetzen zu können, ist es besonders vorteilhaft, zur Befestigung der Leuchtenabdeckung an einem Trägerkörper einen Befestigungsflansch vorzusehen, der rotationssymmetrisch ausgebildet und um seine Rotationsachse beweglich ist. Dadurch wird eine 360° Einstellbarkeit des Bewegungsmelders um die Rotationsachse des Befestigungsflansches der Leuchtenabdeckung erreicht.

Vorteilhaft hinsichtlich einer flexiblen Montage an verschiedenen Orten ist es auch, wenn mindestens ein optisches Element an einer Längsseite der Leuchtenabdeckung und mindestens ein weiteres optisches Element an einer Stirnseite der Leuchtenabdeckung angeordnet sind.

Weitere vorteilhafte Ausgestaltungen und Weiterbildungen der Erfindung ergeben sich aus den Unteransprüchen sowie aus der Beschreibung im Zusammenhang mit den Zeichnungen. Es zeigen:
- Fig. 1: eine erste Ausführungsform einer erfindungsgemäßen Leuchte in perspektivischer Darstellung.
- Fig. 2: die Leuchte in Fig. 1 in einem Schnitt gemäß der Linie II-II in Fig. 1,
- Fig. 3: eine zweite Ausführungsform einer erfindungsgemäßen Leuchte in einer Seitenansicht,
- Fig. 4: die Leuchte in Fig. 3 in einer Ansicht von oben,
- Fig. 5: eine dritte Ausführungsform einer erfindungsgemäßen Leuchte in einer Ansicht von oben,
- Fig. 6: eine vierte Ausführungsform einer erfindungsgemäßen Leuchte in einer Ansicht von oben,
- Fig. 7: die Leuchte in Fig. 6 in teilweise aufgebrochener Seitenansicht,
- Fig. 8: ein stirnseitiges Ende einer fünften Ausführungsform einer erfindungsgemäßen Leuchte, welche im wesentlichen der Leuchte in Fig. 3 entspricht, in vergrößerter Darstellung,
- Fig. 9: einen Schnitt durch eine Gußform für eine Leuchte gemäß Fig. 8,
- Fig. 9a: einen vergrößerten Ausschnitt aus Fig. 9,
- Fig. 10: eine Ansicht eines ersten Formeinsatzes der Gußform bei geöffneter Gußform gemäß den Pfeilen X-X in Fig. 9 und
- Fig. 11: eine Ansicht eines zweiten Formeinsatzes der Gußform bei geöffneter Gußform gemäß den Pfeilen XI-XI in Fig. 9.

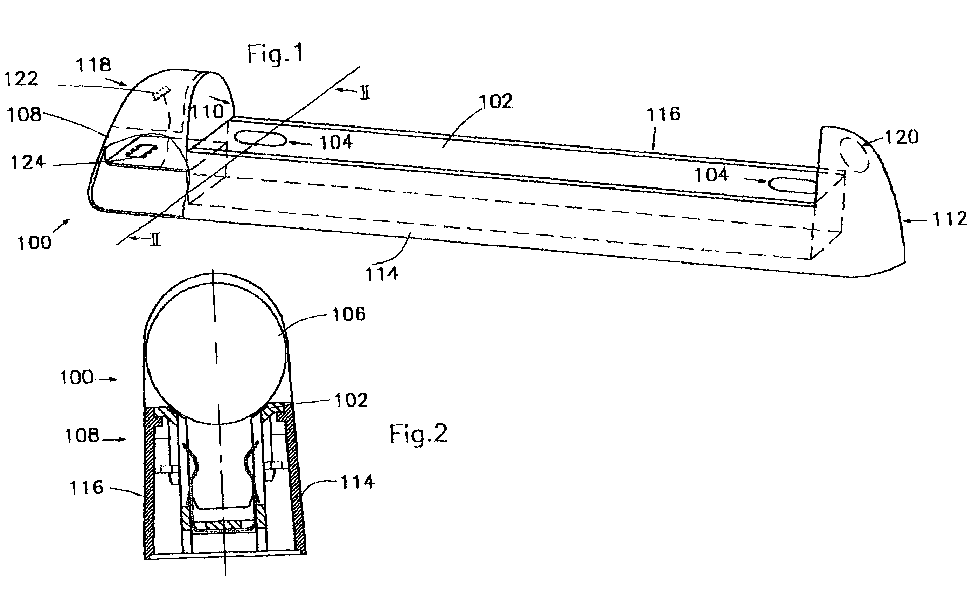

Die in den Fig. 1 und 2 gezeigte Leuchte 100 ist eine sogenannte Stableuchte, bei der an einem länglichen flachen Trägerkörper 102 Klemmfassungen 104 zur Halterung eines linienförmigen ohmschen Leuchtmittels 106 (in Fig. 1 nicht gezeigt) vorgesehen sind. Neben den Klemmfassungen 104 sind an dem Trägerkörper als AnschluBelemente Lüsterklemmen (nicht gezeigt) vorgesehen, an welchen Zuleitungen zur Versorgung der Leuchte 100 mit Strom anklemmbar sind.

Der Trägerkörper 102 wird teilweise von einer Leuchtenabdeckung gekapselt, so daß bei eingesetztem Leuchtmittel 106 eine Berührbarkeit des Trägerkörpers 102 ausgeschlossen ist. Die Leuchtenabdeckung weist zwei stirnseitige Kappen 110, 112 auf, welche durch zwei längliche Stege 114, 116 miteinander verbunden sind. Endkappen 110, 112 und Stege 114, 116 sind jeweils spiegelsymmetrisch zueinander ausgebildet und bilden gemeinsam die Leuchtenabdeckung 108. In jede der Endkappen 110, 112 ist ein beim Spritzgießen der Leuchtenabdeckung 108 erzeugtes optisches Element 118, 120 integriert, welches als System von Einzellinsen ausgebildet ist, wobei die Konturen jeweils an der Innenseite der Endkappen 110, 112 angeordnet sind.

Die optischen Elemente 118, 120 weisen jeweils an ihrer der Innenseite der Endkappen 110, 112 zugewandten Seite zwei Haltenasen oder Schienenabschnitte (nicht gezeigt) auf, die es erlauben, ein Sensorelement an ihnen zu befestigen. Bei der in Fig. 1 gezeigten Leuchte 100 ist nur ein Sensorelement 122 vorgesehen, welches über eine Meßleitung mit einer an dem Trägerkörper angeordneten Steuerelektronik 124 verbunden ist. Die Steuerelektronik schaltet die Stromversorgung des ohmschen Leuchtmittels 106 ein, wenn von dem Sensorelement 122 eine Bewegung nachgewiesen wird.

Die beiden optischen Elemente 118, 120 sind als Fresnel-Linsen ausgebildet, weisen jedoch einen unterschiedlichen Erfassungsbereich auf, so daß durch Umstecken des Sensorelements 122 von dem optischen Element 118 zu dem optischen Element 120 ein anderer Winkelbereich überwachbar wird. Vorzugsweise weist das optische Element 118 einen Erfassungsbereich von 60° zur Senkrechten seiner Hauptachse auf, wohingegen das optische Element 120 einen Erfassungsbereich von 30° zu seiner senkrechten aufweist.

Bei der Leuchte 100 sind das Sensorelement 122 und die Steuerelektronik 124 voneinander unabhängige Baugruppen, die lediglich durch eine MeBleitung verbunden sind. Dadurch ist es möglich, die Steuerelektronik unterhalb des Trägerkörpers 102 anzubringen, so daß eine Abschirmung der zu der Steuerelektronik führenden und von der Steuerelektronik zu den ohmschen Leuchten führenden Leitungen sowohl durch die Leuchtenabdeckung als auch durch den Trägerkörper erfolgt.

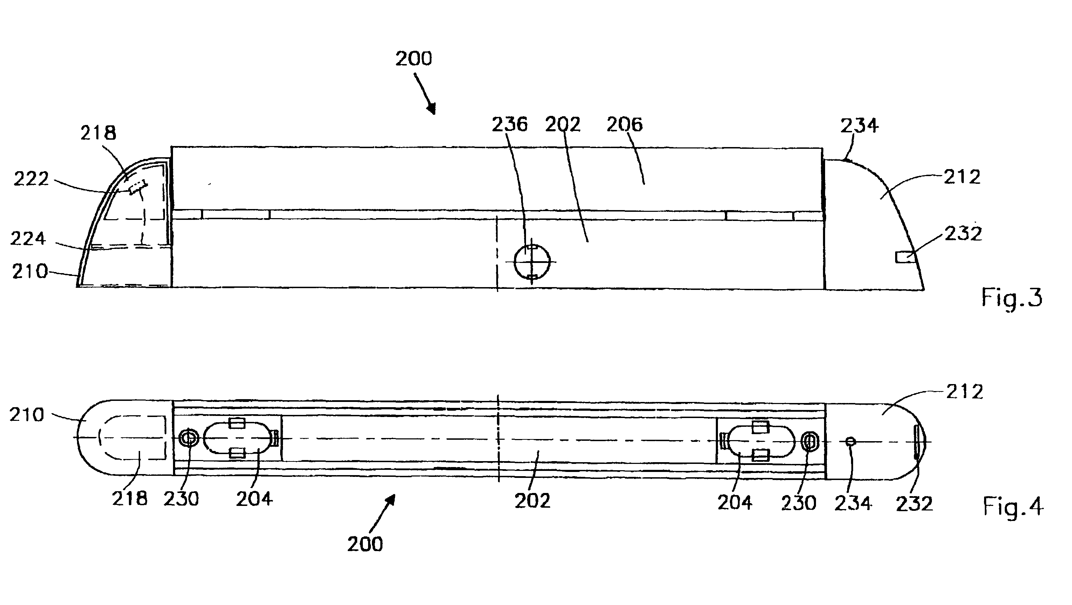

Die in den Fig. 3 und 4 gezeigte erfindungsgemäße Leuchte 200 gemäß einer zweiten Ausführungsform, unterscheidet sich von der Leuchte 100 gemäß der ersten Ausführungsform in den Fig. 1 und 2 lediglich hinsichtlich ihres Designs und hinsichtlich der zur Steuerung der betriebsweise vorgesehenen Bedienelemente. Teile der Leuchte 200, die Teile der Leuchte 100 entsprechen, sind daher mit Bezugszeichen versehen, die gegenüber den Bezugszeichen der entsprechenden Leuchte gemäß der ersten Ausführungsform um einhundert erhöht sind. Auf die Beschreibung im Zusammenhang mit den Fig. 1 und 2 wird verwiesen.

Die Leuchte 200 weist einen Trägerkörper 202 auf, in welchem zur Befestigung an einer Wand Befestigungslöcher 230 zur Aufnahme von Befestigungsschrauben (nicht gezeigt) vorgesehen sind. Die Befestigungslöcher 230 werden wie auch die Klemmfassungen 204 im Betriebszustand der Leuchte 200 von dem Leuchtmittel 206, welches in Fig. 4 nicht gezeigt ist, abgedeckt.

Im Gegensatz zu der Leuchte 100 gemäß der ersten Ausführungsform sind bei der Leuchte 200 gemäß der zweiten Ausführungsform die beiden Endkappen 210, 212 nicht mittels Stegen miteinander verbunden sondern jeweils als separates Teil mit dem Trägerkörper 202 separat abnehmbar verbunden.

Zur Auswertung der Sensorsignale des unterhalb des optischen Elements 218 angeordneten Sensorelements 222 ist eine Steuerelektronik 224 vorgesehen, welche neben der Verarbeitung der Sensorsignale des Sensorelements 222 auch einen Modusschalter enthält, der über einen Näherungsschalter 232 betätigbar ist. Mit diesen läßt sich die Leuchte auf Dauerlicht schalten. Der Betriebszustand der Steuerelektronik 224 wird über eine LED-Diode 234 angezeigt. Zur Ein- und Ausschaltung der Leuchte 200 ist ein die Stromzufuhr unterbrechender Kippschalter 236 vorgesehen.

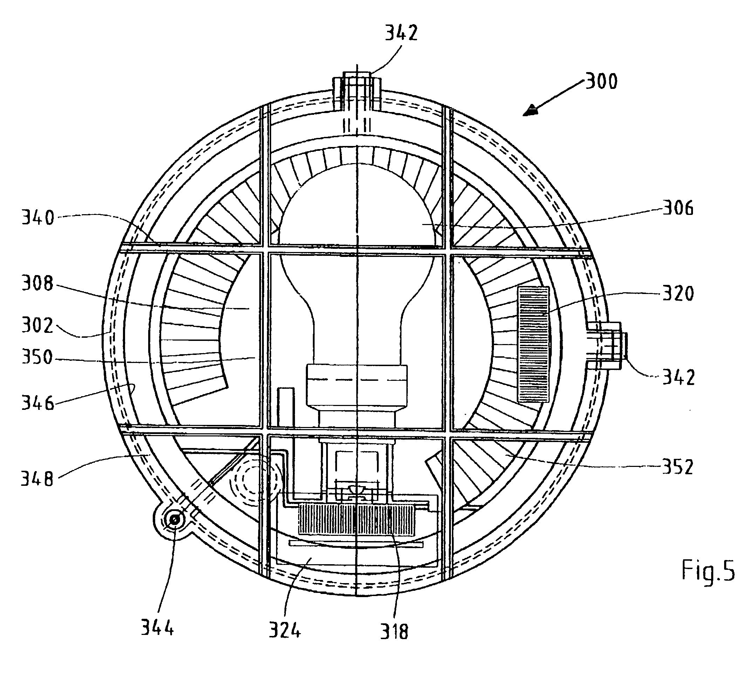

Die in Fig. 5 gezeigte dritte Ausführungsform einer erfindungsgemäßen Leuchte 300 unterscheidet sich von den Leuchten 100, 200 gemäß der ersten und zweiten Ausführungsform hinsichtlich des Designs. Entsprechende Teile sind daher mit Bezugszeichen versehen, die gegenüber entsprechenden Teilen der ersten und zweiten Ausführungsform um zweihundert bzw. einhundert erhöht sind.

Bei der in Fig. 5 gezeigten Leuchte 300 handelt es sich dem Design nach um eine sogenannte runde Schiffsarmatur, die einen im wesentlichen runden Trägerkörper 302 aufweist, der ganzflächig von einer aus durchsichtigem Polyethylen gefertigten Leuchtenabdeckung 308 abgedeckt wird. Zur Halterung der Leuchtenabdeckung an dem Trägerkörper und als Berührungsschutz ist ein Gitterkorb 340 vorgesehen, der an zwei radial vom Trägerkörper 302 abstehenden Vorsprüngen 342 eingehängt und an einem dritten Vorsprung 344 festgeschraubt ist. Der Trägerkörper 302 und die Leuchtenabdeckung 308 bilden eine vollständig geschlossene Zelle, die wasserdicht ausgebildet ist, wobei ein unter einem Rand des Gitterkorbes 340 greifender Ringflansch 348 der Leuchtenabdeckung 308 eine Drehung der Leuchtenabdeckung 308 relativ zu dem Trägerkörper 302 und dem Gitterkorb 340 erlaubt.

Die Leuchtenabdeckung 308 ist wannenförmig mit einem Bodenbereich 350 und einem im wesentlichen rechtwinklig zu dem Bodenbereich 350 verlaufenden Randbereich 352 ausgebildet. Zur Beeinflussung der Richtcharakteristik des Bewegungsmelders ist dem Bodenbereich 350 ein erstes optisches Element 318 vorgesehen, welches als Fresnel-Linse ausgebildet ist. Ferner ist im Randbereich ein zweites optisches Element 320 ausgebildet, mit welchem ebenfalls die Richtcharakteristik eines Sensorelements eines Bewegungsmelders beeinfluBbar ist. Die Hauptachsen der optischen Elemente 318, 320 stehen dabei im wesentlichen senkrecht zueinander, wobei beide optischen Elemente 318, 320 einen Sektorbereich von etwa 30° abdecken.

Bei der in Fig. 5 gezeigten Ausführungsform ist zur Auswertung von Sensorsignalen eines Sensorelements, das unterhalb des optischen Elements 318 unsichtbar angeordnet ist, eine Steuerelektronik 324 vorgesehen. Über diese Steuerelektronik wird das Leuchtmittel 306 mit Strom versorgt, welches als Energiesparleuchte ausgebildet ist, um die thermische Belastung der Leuchtenabdeckung auf ein Minimum zu reduzieren. Das nicht gezeigte Sensorelement der Leuchte 300 gemäß der dritten Ausführungsform ist an dem optischen Element 318 lösbar befestigt, so daß je nach Wahl des Benutzers auch eine lösbare Befestigung an dem optischen Element 320 herstellbar ist.

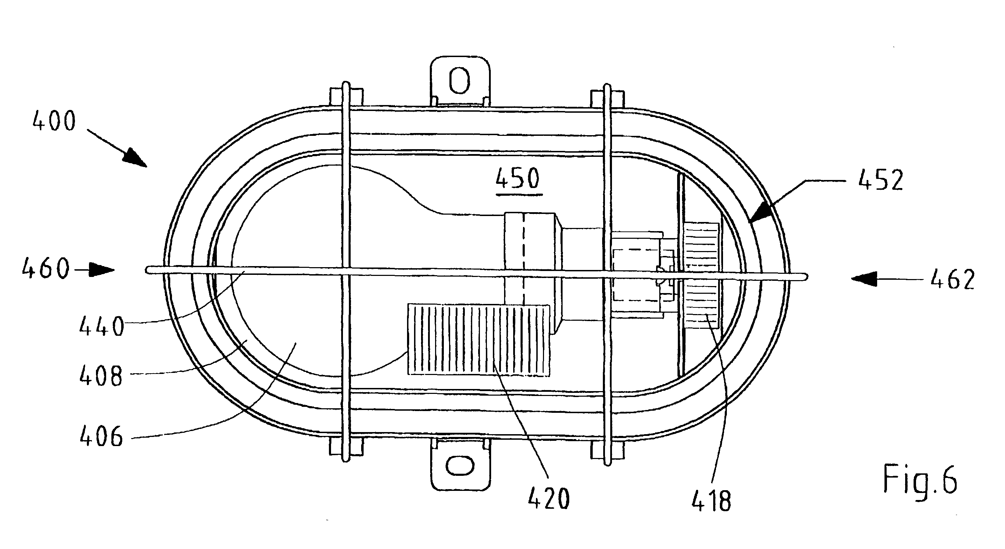

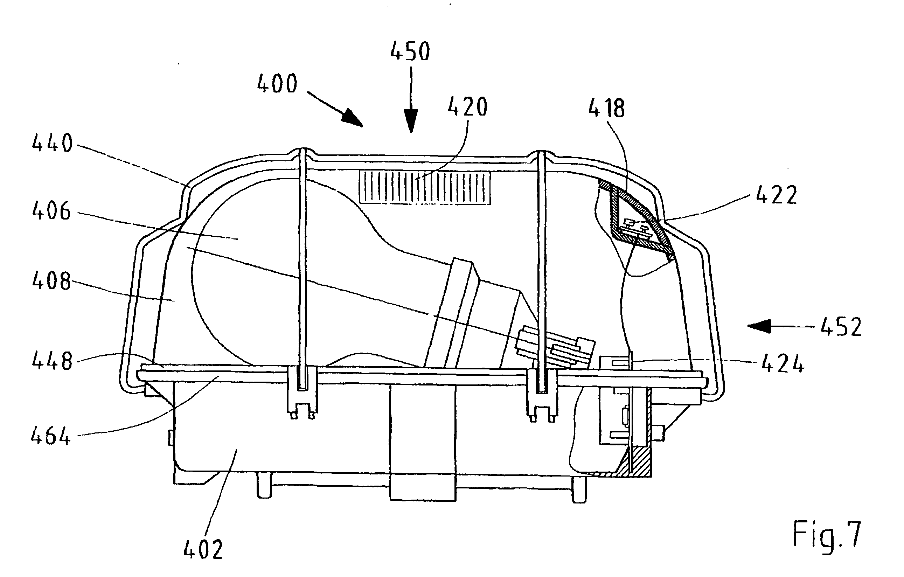

Die in den Fig. 6 und 7 gezeigte vierte Ausführungsform einer erfindungsgemäßen Leuchte 400 unterscheidet sich von der Leuchte 300 gemäß der dritten Ausführungsform in Fig. 5 in erster Linie durch die äußere Form. Teile der Leuchte 400 gemäß der vierten Ausführungsform, die Teilen der Leuchte 300 der dritten Ausführungsform entsprechen, sind daher mit Bezugszeichen versehen, die gegenüber den entsprechenden Teilen der Leuchte 300 gemäß der dritten Ausführungsform um einhundert erhöht sind. Auf die Beschreibung dieser Teile anhand der Leuchte 300 gemäß der dritten Ausführungsform wird insoweit verwiesen.

Bei der Leuchte 400 gemäß der vierten Ausführungsform sind Trägerkörper 402 und Leuchtenabdeckung 408 in Draufsicht langgestreckt mit zwei in Draufsicht halbkreisförmigen stirnseitigen Enden ausgeführt. Die Leuchtenabdeckung 408, die wie die Leuchtenabdeckung 308 aus Polyethylen bzw. Glas wannenförmig hergestellt ist, um das Leuchtmittel 406, das Sensorelement 422 und die Steuerelektronik 424 wasserdicht zu kapseln weist dabei einen Flansch 448 auf, der plan auf einen entsprechend geformten Flansch 464 des Trägerkörpers 402 aufgesetzt ist. Zu in Draufsicht Längs- und Querachsen der Leuchte 400 sind der Flansch 448 der Leuchtenabdeckung 408 und der Flansch 464 des Trägerkörpers 402 spiegelsymmetrisch ausgebildet, so daß die Leuchtenabdeckung 408 und der Trägerkörper 402 in zwei unterschiedlichen Positionen zueinander montierbar sind. Da die Leuchtenabdeckung 408 wie die Leuchtenabdeckung 308 lediglich zwei optische Elemente 418, 420 aufweist, die am Bodenbereich 450 bzw. am Randbereich 452 der Leuchtenabdeckung angeordnet sind, kann durch Verdrehen der Leuchtenabdeckung 408 relativ zum Trägerkörper 402 die Richtcharakteristik des Bewegungsmelders der Leuchte 400 auch dann noch verändert werden, wenn der Trägerkörper 402 der Leuchte 400 bereits montiert ist.

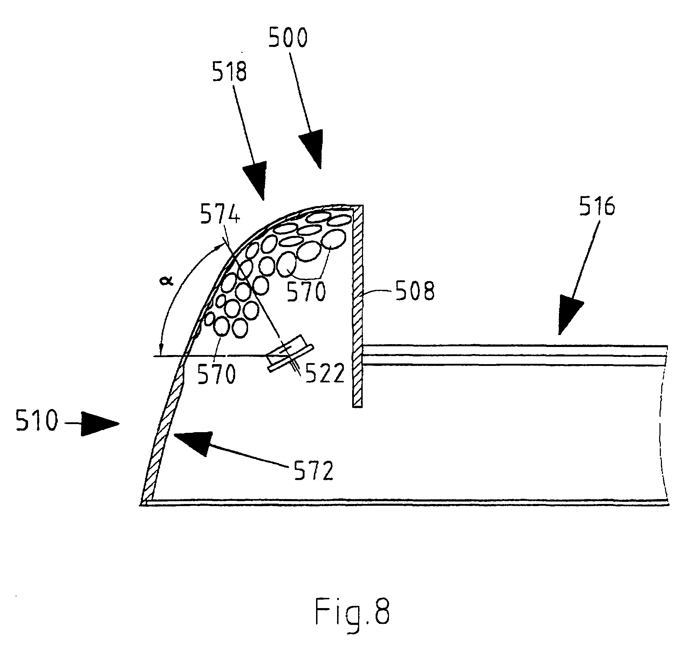

In Fig. 8 ist eine Leuchte 500 gemäß einer fünften Ausführungsform gezeigt, wobei die Leuchte hinsichtlich der äußeren Formgestaltung, der verwendeten Leuchtmittel, des optischen Elements 518, des Sensorelements 522, der Steuerelektronik und der Bedienelemente der Leuchte in den Fig. 3 und 4 entspricht. Hinsichtlich dieser Teile wird auf die Beschreibung der Leuchte 200 gemäß der zweiten Ausführungsform verwiesen. Hinsichtlich der Gestaltung der Leuchtenabdeckung 508 entspricht die Leuchte 500 gemäß der fünften Ausführungsform der Leuchte 100 gemäß der ersten Ausführungsform, insbesondere da die Endkappen 510 (rechte Endkappe nicht gezeigt) über einstückig beim Gießen der Leuchtenabdeckung 508 angeformte Stege miteinander verbunden sind.

Aus Fig. 8 ist ersichtlich, daß das optische Element 518 aus einem System einzelner optischer Linsen 570 besteht, die sich jeweils erhaben an der Innenseite 572 der Endkappe 510 wölben. Durch diese Linsen 570 kann das Infrarot-Sensorelement 522 des Bewegungsmelders Infrarotquellen in einem Winkelbereich a von 60° zur Normalen (Hauptachse) des Sensorelements 522 erfassen.

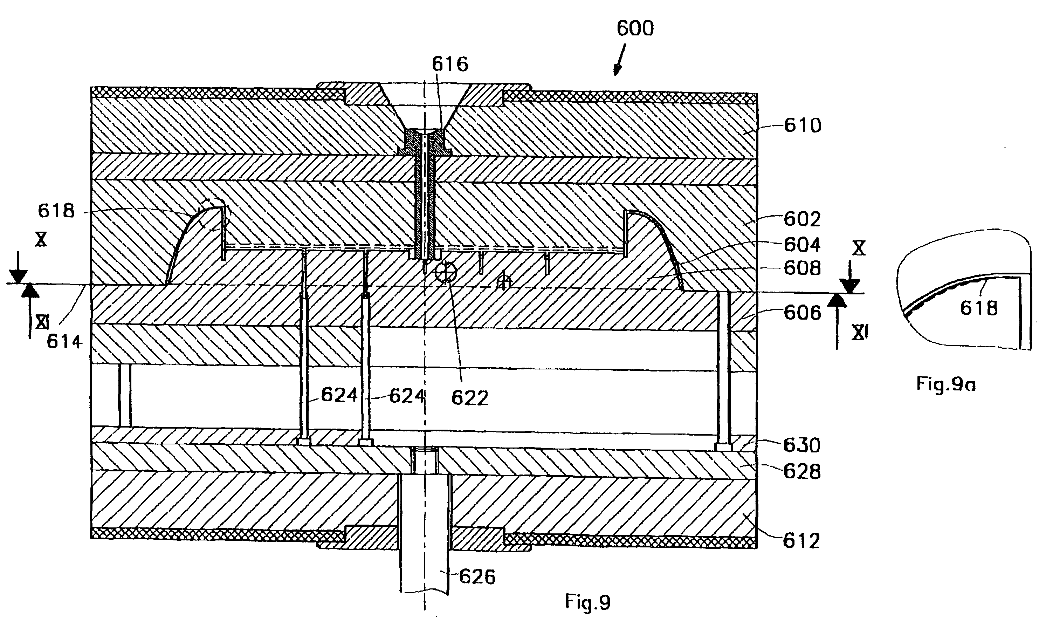

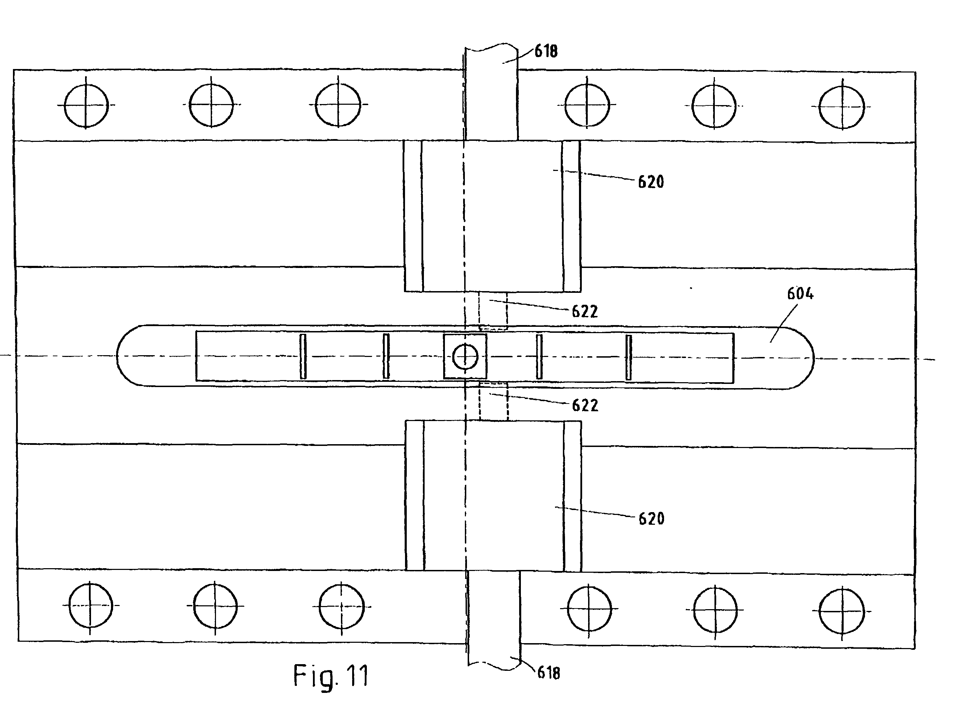

Die Fig. 9 bis 11 dienen der Beschreibung einer Gußform 600 einer Leuchte 500 gemäß Fig. 8. Die Gußform 600 weist als wesentliche Formwerkzeuge einen oberen, hohl geformten ersten Formeinsatz 602 auf, der eine der Form der zu fertigenden Leuchtenabdeckung 508 entsprechende Vertiefung 604 aufweist. Als zweites Formwerkzeug weist die Gußform 600 einen zweiten Formeinsatz 606 auf, welcher einen zu der Vertiefung 604 komplementär ausgebildeten erhabenen Vorsprung 608 aufweist. Die beiden Formeinsätze 602, 606 sind an Aufspannplatten 610, 612 befestigt und lassen sich relativ zueinander so verfahren, daß der Vorsprung 608 in die Vertiefung 604 eintaucht. Im zusammengefahrenen Zustand liegen die beiden Formeinsätze 602, 606 entlang einer Trennlinie 614 aneinander an, wobei im Bereich des Vorsprungs 608 zwischen Vorsprung 608 und Vertiefung 604 ein Spalt verbleibt, der beim Gießen über einen Anguß 616 mit Polyethylen ausgespritzt wird. Die Gußform 600 weist nur einen Anguß auf, so daß an der fertigen Leuchtenabdeckung auch nur ein Anspritzpunkt verbleibt. Die Entlüftung der Gußform beim Gießen erfolgt über nicht gezeigte Entlüftungskanäle.

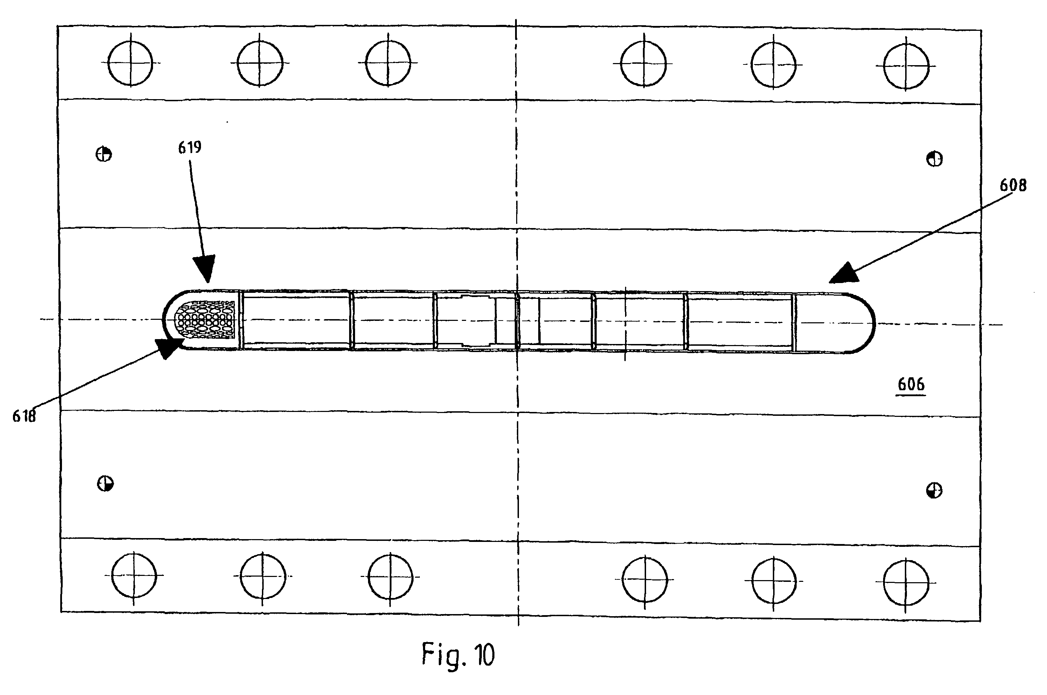

In den Fig. 9 und 10 ist erkennbar, daß zur Erzeugung der Linsen des optischen Elements in dem Vorsprung 608 des zweiten Formeinsatzes 606 im Bereich der zu formenden Endkappen Vertiefungen 618 vorgesehen sind, die gemeinsam einen Linsenformabschnitt 619 bilden. Um an der zu fertigenden Leuchtenabdeckung Durchbrüche für Schalter oder ähnliches anbringen zu können, weist die Gußform 600 Kernzüge 618 und Schieber 620 auf, mit welchen Kerne 622 (als unsichtbare gezeigt), derart im Bereich des ersten Formeinsatzes 602 quer zu der Vertiefung 604 zustellbar sind, so daß beim Abspritzen der Gußform Ausnehmungen herstellbar sind.

Zur Erleichterung des Entformens einer in der Gußform 600 hergestellten Leuchtenabdeckung sind an der Gußform Auswerfer 624 vorgesehen, welche über einen Auswerferbolzen 626, eine Auswerferdruckplatte 628 und eine Auswerferhalteplatte 630 relativ zu dem zweiten Formeinsatz 606 verfahrbar sind.

## Patentansprüche

1. Leuchtenabdeckung einer Leuchte mit Bewegungsmelder zur mindestens teilweisen Kapselung eines Trägerkörpers (102; 202; 302; 402) und/oder von AnschluBelementen der Leuchte, mit einem optischen Element (118,120;218;318,320;418,420;518) zur Beeinflussung des räumlichen Empfindlichkeitsbereichs eines Sensorelements (122;222; 322;422;522) des Bewegungsmelders,
**dadurch gekennzeichnet,**
**daß** die Leuchtenabdeckung (108;208;308;408;508) und das optische Element (118,120;218;318,320; 418,420;518) einstückig ausgebildet und in einer gemeinsamen Form in einem Arbeitsgang hergestellt sind.

2. Leuchtenabdeckung nach Anspruch 1, **dadurch gekennzeichnet, daß** mindestens zwei optische Elemente (118,120;318,320; 418,420) zur Beeinflussung des räumlichen Empf indlichkeitsbereichs von Sensorelementen (122;322;422) eines Bewegungsmelders vorgesehen sind, die Aufnahmen zur wahlweisen Anbringung von Sensorelementen (122;322;422) aufweisen.

3. Leuchtenabdeckung nach Anspruch 1 oder 2, **dadurch gekennzeichnet, daß** die Leuchtenabdeckung (108; 208; 308; 408; 508) und das optische Element (118,120; 218; 318,320; 418,420; 518) einheitlich eingefärbt und/oder oberflächenstrukturiert sind.

4. Leuchtenabdeckung nach einem der Ansprüche 1 bis 3, **dadurch gekennzeichnet, daß** die Leuchtenabdeckung (308; 408) wannenförmig ausgebildet ist, um das Leuchtmittel (306; 406) einer Leuchte (300; 400) gegen Berührung zu kapseln.

5. Leuchtenabdeckung nach einem der Ansprüche 1 bis 4 **dadurch gekennzeichnet, daß** zur Befestigung an einem Trägerkörper (302) ein Befestigungsflansch, insbesondere ein Ringflansch (348), vorgesehen ist, der rotationssymmetrisch ausgebildet und um seine Rotationsachse beweglich ist.

6. Leuchtenabdeckung nach einem der Ansprüche 1 bis 5, **dadurch gekennzeichnet, daß** das optische Element (118,120; 218;318,320; 418,420; 518) und die Leuchtenabdeckung (108;208;308;408;508) durch Spritzgießen hergestellt sind.

7. Leuchte mit Bewegungsmelder, mit einem Trägerkörper (102; 202; 302; 402) zur Aufnahme von Leuchtmittelfassungen und Anschlußelementen, **gekennzeichnet durch** eine Leuchtenabdeckung (108; 208; 308; 408; 508) nach einem der Ansprüche 1 bis 6.

8. Leuchte nach Anspruch 7, **dadurch gekennzeichnet, daß** der Bewegungsmelder ein Sensorelement (122;222;322;422;522) und eine Steuerelektronik (124; 224; 324; 424) aufweist, die als räumlich getrennte Baugruppen ausgebildet sind und innerhalb der Leuchte (100;200;300;400;500) räumlich unabhängig voneinander positionierbar sind.

9. Gußform für eine Anschlußelemente und/oder einen Trägerkörper einer Leuchte mindestens teilweise kapselnde Leuchtenabdeckung einer Leuchte mit Bewegungsmelder, **gekennzeichnet durch** einen Linsenformabschnitt (619), der derart ausgebildet ist, daß beim Gießen in der Wandung der Leuchtenabdeckung ein optisches Element zur Beeinflussung des räumlichen Empfindlichkeitsbereichs eines Sensorelements des Bewegungsmelders ausgebildet wird.

10. Gußform nach Anspruch 9, **dadurch gekennzeichnet, daß** die Oberflächen der Gußform derart gestaltet sind, daß die zu fertigenden Leuchtenabdeckungen die Merkmale der Ansprüche 2 bis 6 aufweisen.

## Claims

1. A cover for a light of a light with a motion detector, for at least partially enclosing a carrier body (102; 202; 302; 402) and/or connection members of said light, comprising an optical member (118, 120; 218; 318, 320; 418, 420; 518) for acting upon the spatial sensitivity range of a sensor member (122; 222; 322; 422; 522) of said motion detector,
**characterized in that**
said cover for a light (108; 208; 308; 408; 508) and said optical member (118, 120; 218; 318, 320; 418, 420; 518) are integrally formed and are fabricated in one operation in a common mold.

2. The cover for a light according to claim 1, **characterized in that** at least two optical members (118, 120; 318, 320; 418, 420) are provided for acting upon the spatial sensitivity range of sensor members (122; 322; 422) of a motion detector, which optical members present receptions for optionally mounting sensor members (122; 322; 422).

3. The cover for a light according to claim 1 or 2, **characterized in that** said cover for a light (108; 208; 308; 408; 508) and said optical member (118, 120; 218; 318, 320; 418, 420; 518) are uniformly colored and/or surface-textured.

4. The cover for a light according to any one of claims 1 through 3, **characterized in that** said cover for a light (308; 408) is configured trough-shaped, so as to enclose the lighting element (306; 406) of a light against contact.

5. The cover for a light according to any one of claims 1 through 4, **characterized in that**, for fastening to a carrier body (302), a fastening flange, in particular a ring flange (348) is provided that is configured rotationally symmetrical and is movable about its axis of rotation.

6. The cover for a light according to any one of claims 1 through 5, **characterized in that** the optical member (118, 120; 218; 318, 320; 418, 420; 518) and the cover for a light (108; 208; 308; 408; 508) are manufactured by injection molding.

7. A light with motion detector, comprising a carrier body (102; 202; 302; 402) for receiving lamp holders and connection members, **characterized by** a cover for a light (108; 208; 308; 408; 508) according to any one of claims 1 through 6.

8. The light according to claim 7, **characterized in that** said motion detector comprises a sensor member (122; 222; 322; 422; 522) and an electronic control unit (124; 224; 324; 424) configured as spatially separated assemblies, and which can be positioned within the light (100; 200; 300; 400; 500) spatially independent from each other.

9. A casting mold for a cover for a light with a motion detector, which cover for a light at least partially encloses connection members and/or a carrier body of a light, **characterized by** a lens form portion (619) configured in such a manner that during casting, an optical member for acting upon the spatial sensitivity range of a sensor member of said motion detector is formed in the wall of the cover for a light.

10. The casting mold according to claim 9, **characterized in that** the surfaces of said casting mold are configured in such a manner that the covers for a light to be manufactured have the features of claims 2 through 6.

## Revendications

1. Couvercle de lampe d'une lampe avec un détecteur de mouvement, pour enfermer au moins partiellement un corps porteur (102 ; 202 ; 302 ; 402) et/ou des éléments de raccordement deladite lampe, comprenant un élément optique (118, 120 ; 218 ; 318, 320 ; 418, 420 ; 518) pour agir sur la sphère de sensibilité spatiale d'un élément capteur (122 ; 222 ; 322 ; 422 ; 522) dudit détecteur de mouvement,
**caractérisé en ce que**
ladite couvercle de lampe (108 ; 208 ; 308 ; 408 ; 508) et ledit élément optique (118, 120 ; 218 ; 318, 320 ; 418, 420 ; 518) sont monoblocs et fabriqués en une opération dans un moule commun.

2. Le couvercle de lampe selon la revendication 1, **caractérisé en ce qu'**au moins deux éléments optiques (118, 120 ; 318, 320 ; 418, 420) sont prévus, pour agir sur la sphère de sensibilité spatiale d'éléments capteurs (122 ; 322 ; 422) d'un détecteur de mouvement, ces éléments optiques présentant des réceptacles pour, en option, monter des éléments capteurs (122 ; 322 ; 422).

3. Le couvercle de lampe selon la revendication 1 ou 2, **caractérisé en ce que** ledit couvercle de lampe (108 ; 208 ; 308 ; 408 ; 508) et ledit élément optique (118, 120 ; 218 ; 318, 320 ; 418, 420 ; 518) sont uniformément colorés et/ou ont une texture de surface uniforme.

4. Le couvercle de lampe selon l'une quelconque des revendications 1 à 3, **caractérisé en ce que** ledit couvercle de lampe (308 ; 408) est en forme de cuvette de façon à enfermer et proteger le moyen d'éclairage (306 ; 406) d'une lampe de contacts.

5. Le couvercle de lampe selon l'une quelconque des revendications 1 à 4, **caractérisé en ce que**, pour la fixation à un corps porteur (302), une bride de fixation, en particulier une bride annulaire (348), est prévue, formée pour constituer une symétrie de rotation et mobile autour de son axe de rotation.

6. Le couvercle de lampe selon l'une quelconque des revendications 1 à 5, **caractérisé en ce que** l'élément optique (118, 120 ; 218 ; 318, 320 ; 418, 420 ; 518) et le couvercle de lampe (108 ; 208 ; 308 ; 408 ; 508) sont fabriqués par moulage par injection.

7. Une lampe incluant un détecteur de mouvement, comprenant un corps porteur (102 ; 202 ; 302 ; 402) pour recevoir des porte-lampes et des éléments de raccordement, **caractérisé par** un couvercle de lampe (108 ; 208 ; 308 ; 408 ; 508) selon l'une quelconque des revendications 1 à 6.

8. La lampe selon la revendication 7, **caractérisé en ce que** ledit détecteur de mouvement comprend un élément capteur (122 ; 222 ; 322 ; 422 ; 522) et une unité de contrôle électronique (124 ; 224 ; 324 ; 424) constitués en tant qu'ensembles spatialement séparés et pouvant être positionnés à l'intérieur de la lampe (100 ; 200 ; 300 ; 400 ; 500), spatialement indépendant les uns des autres.

9. Moule pour couvercle de lampe incluant un détecteur de mouvement, ce couvercle de lampe enfermant au moins partiellement des éléments de raccordement et/ou un corps porteur d'un appareil d'éclairage, **caractérisé par** une portion en forme de lentille (619) constituée de manière telle que, pendant le moulage, un élément optique pour agir sur la sphère de sensibilité spatiale d'un élément capteur dudit détecteur de mouvement soit rapporté par formage dans la paroi du couvercle de lampe.

10. Le moule selon la revendication 9, **caractérisé en ce que** les surfaces dudit moule soient constituées de manière telle que les couvercles de lampe à fabriquer aient les caractéristiques des revendications 2 à 6.
